# EUROPÄISCHE PATENTSCHRIFT

(11) **EP 1 000 848 B1**
(45) Veröffentlichungstag und Bekanntmachung des Hinweises auf die Patenterteilung: **27.12.2006**
(21) Anmeldenummer: 99121742.3
(22) Anmeldetag: 03.11.1999
(51) Int. Cl.: B62K 25/08, B62K 21/12

(54) **Federungseinrichtung**
Suspension system
Système de suspension

(30) Priorität: 09.11.1998 DE 19851463
(43) Veröffentlichungstag der Anmeldung: 17.05.2000
(73) Patentinhaber: ContiTech Luftfedersysteme GmbH, 30165 Hannover (DE)
(72) Erfinder: Thurow, Gerhard, 30823 Garbsen (DE); Altsinger, Roland, Dr., 31303 Burgdorf (DE); Acker, Bernd, 71384 Weinstadt (DE); Gönnheimer, Peter, Dipl. - Ing., 71384 Weinstadt (DE); Klander, Hans-Peter, Dipl.-Ing., 73732 Esslingen (DE); Meljnikov, Darko, Dr., 70771 Leinfelden-Echterdingen (DE); Römer, Matthias, Dipl.-Ing., 71155 Altdorf (DE); Röss, Karl-Heinz, Dipl.-Ing., 73061 Ebersbach (DE); Rutz, Rüdiger, Dr. Ing., 73257 Köngen (DE); Winkler, Martin, Dipl.-Ing., 74374 Zaberfeld (DE)
(74) Vertreter: Finger, Karsten

(56) Entgegenhaltungen:
- DE-A- 3 436 664
- DE-A- 3 934 821
- DE-B- 2 750 667
- DE-B- 2 759 433
- DE-B- 2 836 662
- GB-A- 1 034 471

## Beschreibung

Die Erfindung betrifft eine Federungseinrichtung, insbesondere zur Verwendung in der Vorderradgabel eines Zweiradfahrzeugs.

Die in der Zweiradindustrie bekannten Federelemente für Radaufhängungen sind üblicherweise nach dem Prinzip des Teleskopfederbeins (Teleskopgabel) aufgebaut (siehe z. B. DE-OS 16 80 564 und DE-AS 26 48 221). Solche Federbeine geben keine Anregung für die vorliegende Erfindung.

Bei der Erfindung wird ausgegangen von Luftfedern, wie sie für Radaufhängungen von zweispurigen Fahrzeugen bekannt sind.

Luftfedern bestehen im wesentlichen aus einem (Schlauch-)Rollbalg, der am chassisseitigen oberen Ende von einer Abdeckplatte begrenzt wird und an dem am unteren Ende ein radfester Abrollkolben befestigt ist. Um beim Einfederungsvorgang einen seitlichen Versatz zu verhindern, ist der Rollbalg in der Regel mit einer an der Abdeckplatte befestigten Stützeinrichtung ("Stützglocke") versehen.
Trotz Stützeinrichtung sind herkömmliche Luftfedern nicht in der Lage, eine axiale Führung des abzufedernden Rades längs des Einfederungsweges zu gewährleisten. Deshalb müssen die Räder bzw. die Radachsen an Lenkern geführt werden. Da die an Lenkern aufgehängten Radachsen einen bogenförmigen Federweg beschreiben, muss die Stützeinrichtung elastisch an der Abdeckplatte befestigt sein (siehe z. B. DE 19 08 373).

In der DE-AS 27 59 433 wird eine gattungsgemäß Feder mit den im Oberbegriff des Anspruchs 1 genannten Merkmalen beschrieben. Bei dieser Feder handelt es sich um eine Luftfeder, d. h. eine mit einem kompressiblen Gas gefüllte Feder. Die beschriebene Luftfeder weist zwei unterschiedlich große Federflächen und zwei Federkolben unterschiedlichen Durchmessers auf. Damit weist diese Luftfeder keine Oben/Unten-Symmetrie, d. h. keine Spiegelbildlichkeit bezüglich der horizontalen Mittellinie auf. Die gewünschten Federeigenschaften sollen mit Hilfe einer mittig angeordneten, elastischen Trennmembran erzielt werden.

Die DE 39 34 821 A1 beschreibt eine Luftfeder für Fahrzeugfederung. Beim Einfedern rollt ein unter Druckluft stehender Rollbalg auf einem Stützkolben ab. Dem Rollbalg ist ein höhenverstellbarer Pufferzugeordnet. Durch Absenken des Puffers lassen sich Freigangprobleme vermeiden. Die Luftfeder weist keine integrierten Führungselemente auf. Eine Anregung zur vorliegenden Erfindung ist nicht gegeben.

Die Aufgabe der Erfindung besteht darin, eine gattungsgemäße Federungseinrichtung zu schaffen, bei der die Federeigenschaften ausschließlich durch sich ändernde Wirkflächen und Volumenveränderungen bestimmt werden.

Die vorgenannte Aufgabe wird durch die Merkmale des Anspruchs 1 gelöst, wobei vorteilhafte Ausführungsformen in den Unteransprüchen beschrieben sind.

Erfindungsgemäß werden die beiden Federelemente nicht gleichsinnig hintereinandergeschaltet, (was eine Addition der Federstärken ergeben würde,) sondern die beiden Federelemente sind spiegelbildlich zueinander ausgebildet, wodurch sich eine besonders weiche Federwirkung ergibt, was insbesondere bei Vorderradgabeln von Fahrrädern von Vorteil ist.

Die Federcharakteristik und Federkennlinie wird einzig mit Hilfe einer Konizität von Kolben und/oder Stützglocke realisiert. Der Neigungswinkel α bezogen auf die Längsachse der Feder ist vorzugsweise 5 bis 45°. Durch eine Anpassung der Abrollkonturen können spezielle Federkennlinien realisiert werden.

Optional ist eine horizontale Trennwand zwischen den beiden Innenräumen vorgesehen. In diesem Fall können die beiden Innenräume durch mindestens eine Öffnung miteinander verbunden sein. Die nach dem Push-Pull-Prinzip wirkenden Luftfederelemente können bedämpft werden, indem die getrennten Luftkammern durch geeignete Drosselelemente miteinander verbunden werden.

Die erfindungsgemäße Doppelrollbalgfeder kann statt mit einem Gas (d. h. insbesondere Luft) auch mit einer Hydraulik-Flüssigkeit (d. h. mit einem inkompressiblen Medium) gefüllt sein. Um den auch bei Verwendung eines inkompressiblen Hydraulikmedium erforderlichen Volumenausgleich beim Ein- und Ausfederungsvorgang zu gewährleisten, ist vorzugsweise ein Druckspeicher einzusetzen, in dessen Zuleitung Dämpfungselemente eingesetzt werden können.

Die in den Innenräumen befindliche Gas- oder Flüssigkeitsmenge ist zwecks Einstellung der Federhöhe veränderbar.

Bei der erfindungsgemäßen Anordnung können die beiden Abrollkolben die gegenseitige Führung der beweglichen Teile übernehmen. Durch die starre Verbindung der beiden Abrollkolben der zueinander angeordneten Luftfederelemente ist ein Wegdrehen der Kolben auch ohne extern angeordnete Lenker nicht mehr möglich. Damit ist innerhalb der Federungseinrichtung eine zuverlässige Führung bereits ohne Verwendung eines Außenmantels gegeben.

Im folgenden werden verschiedene Ausführungsformen der erfindungsgemäßen Federungseinrichtung anhand der Abbildungen näher beschrieben. Es zeigt:
Fig. 1 eine erfindungsgemäße Luftfeder im Längsschnitt;
Fig. 2 dieselbe Luftfeder im eingefederten Zustand, ebenfalls im Längsschnitt;
Fig. 3 die Gesamtansicht einer Vorderradgabel mit erfindungsgemäßer Federungseinrichtung, von vorne (Fig. 3a) und von der Seite (Fig. 3b); und
Fig. 4 eine erfindungsgemäße Feder mit Hydraulikfüllung, im Längsschnitt.

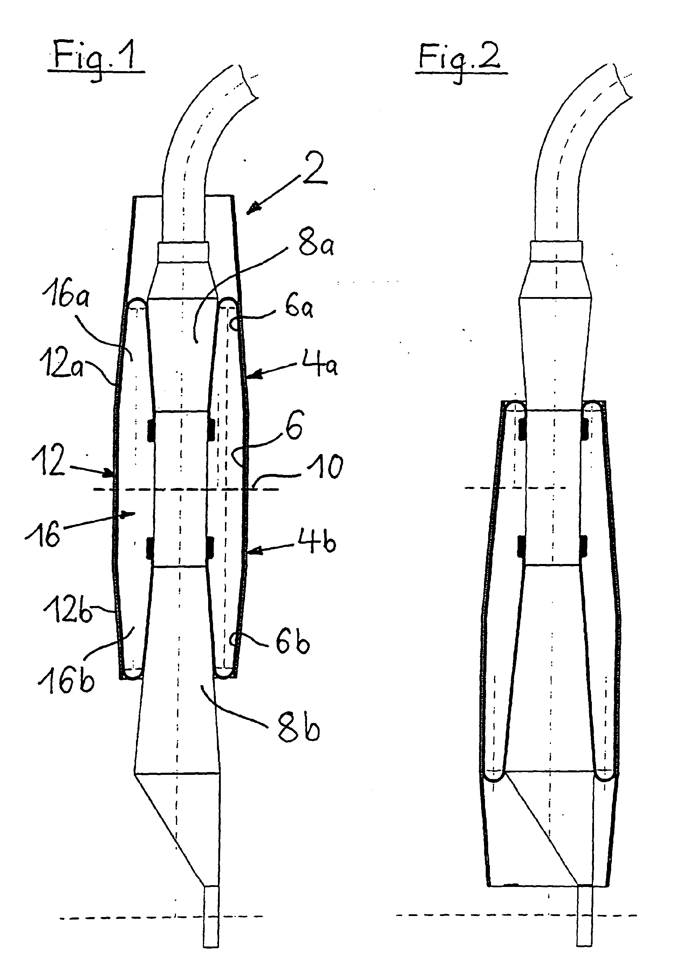

Die in Fig. 1 dargestellte Federungseinrichtung (Luftfeder, Gasfeder) 2 besteht aus zwei zueinander spiegelbildlich angeordneten Luftfederelementen 4a und 4b. Jedes der beiden Federelemente 4a, 4b besteht im wesentlichen aus einem Rollbalg 6a und 6b und einem Abrollkolben 8a und 8b. Auf eine bei üblichen Luftfedern erforderliche Abdeckplatte (hier durch die gestrichelte Linie 10 dargestellt) kann erfindungsgemäß verzichtet werden, wenn - wie hier - eine Stützeinrichtung ("Stützglocke") 12a, 12b zur seitlichen Begrenzung der Rollbälge 6a, 6b vorgesehen ist. Im dargestellten Ausführungsbeispiel bilden sowohl die beiden Rollbälge 6a und 6b als auch die beiden Abrollkolben 8a und 8b und die beiden Stützglocken 12a und 12b ein einziges Stück, d. h. die beiden Rollbälge 6a und 6b bilden einen "Doppel-Rollbalg" 6.

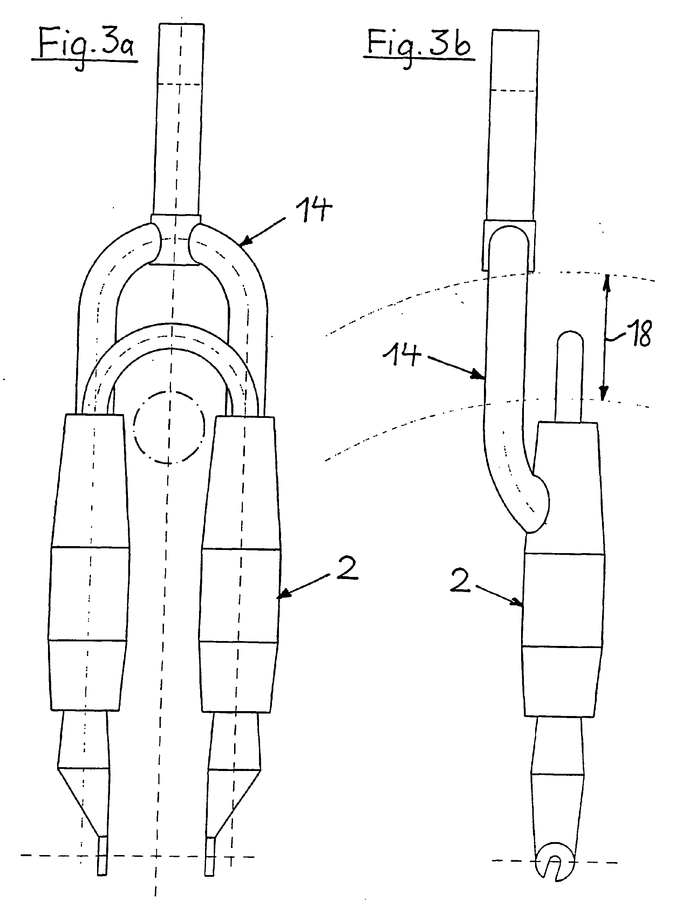

Dabei sind die an der Vorderradgabel eines Fahrrades befestigte Stützglocke 12a, 12b (12) und der an der nicht dargestellten Vorderradnabe befestigte (doppelte) Abrollkolben 8a, 8b leicht konisch ausgebildet (Fig. 3a, 3b).
Der gemeinsame Innenraum 16 (= 16a + 16b) des Doppel-Rollbalgs 6 kann über den (doppelten) Abrollkolben 8a, 8b mit Luft befüllt werden.
Im Falle einer Unterteilung des (Doppel-)Rollbalgs 6 in zwei Kammern 16a, 16b (z. B. längs der gestrichelten Linie 10) kann mit Hilfe von Drosselelementen, die in Durchlassöffnungen (nicht dargestellt) vorgesehen sind, der zwischen den beiden RollbalgKammern 16a, 16b hin- und herströmende Volumenstrom bedämpft werden. D. h.: die erfindungsgemäße Luftfeder 2 kann gleichzeitig als (Stoß)Dämpfer dienen.

Beim Einfederungsvorgang (Einfederungsweg 18 des Vorderrades, Fig. 3b) wird der eine Teil 6b des Doppel-Rollbalgs 6 mit Hilfe des einen Teils 8b des (doppelten) Abrollkolbens 8a, 8b komprimiert, während gleichzeitig der andere Teil 6a des Doppel-Rollbalgs 6 mit Hilfe des anderen Teils 8a des Abrollkolbens 8a, 8b entlastet wird. Die Federkraft entsteht bei Einfederung durch die Differenz der Wirkdurchmesser. Die wirksame Fläche ist eine Kreisringfläche, begrenzt durch den Wirkdurchmesser der kleinen Falte und den Wirkdurchmesser der großen Falte. Zusätzlich entsteht eine Druckerhöhung durch Kompression des Gasvolumens im Innenraum der Doppelfalte bzw. bei Hydraulikflüssigkeit des Volumens in einem Druckspeicher.

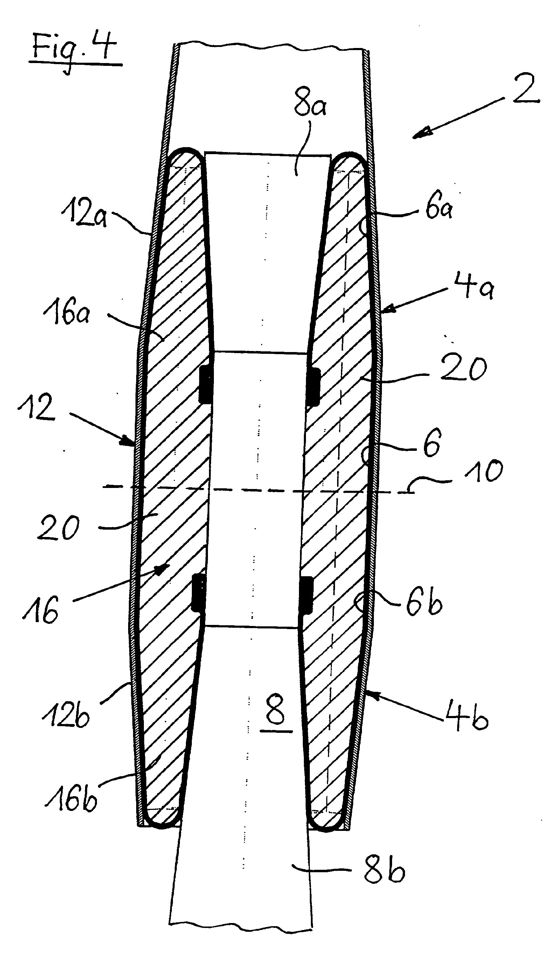

Wie aus Fig. 4 ersichtlich, kann die erfindungsgemäße Federungseinrichtung statt mit Luft oder einem sonstigen Gas mit Hydraulikflüssigkeit 20 gefüllt sein. Um den bei Verwendung einer inkompressiblen Hydraulikflüssigkeit erforderlichen Volumenausgleich beim Einfederungsvorgang zu gewährleisten, ist vorzugsweise ein Druckspeicher einzusetzen, in dessen Zuleitung Dämpfungselemente eingesetzt werden können.

Sowohl im Fall der Ausführungsform als Doppelrollbalg-Luftfeder als auch als Doppelrollbalg-Hydraulikfeder stellt das von Doppelabrollkolben 8 (= 8a + 8b) und Doppel-Rollbalg 6 (= 6a + 6b) umschlossene Volumen 16 (= 16a + 16b) ein abgeschlossenes System dar. Bei der Ausführungsform als Hydraulikfeder ist ein Druckspeicher erforderlich. Die Befüllung mit Gas bzw. Hydraulikflüssigkeit erfolgt einmalig.

### Bezugszeichenliste

- 2: Federungseinrichtung (Luftfeder, Gasfeder)
- 4a, 4b: Luftfederelement
- 6a, 6b: Rollbalg
- 6: Doppel-Rollbalg
- 8a, 8b: Abrollkolben
- 8: Doppelabrollkolben
- 10: gestrichelte Linie (Grenze zwischen zwei Federelementen), Abdeckplatte
- 12a, 12b: Stützeinrichtung ("Stützglocke"), Außengehäuse
- 12: gemeinsamer Außenmantel
- 14: Vorderradgabel, Fahrradgabel
- 16a, 16b: Luftfederinnenräume, Rollbalgkammern
- 16: gemeinsamer Innenraum des Rollbalgs (Luftfederinnenraum)
- 18: Einfederungsweg
- 20: Medium (Hydraulikflüssigkeit)

## Patentansprüche

1. Federungseinrichtung (2), die aus zwei koaxial zueinander angeordneten Federelementen (4a und 4b) aufgebaut ist,
- wobei die Federelemente (4a und 4b) im Wesentlichen aus je einem Rollbalg (6a und 6b), die beide einen gemeinsamen Doppel-Rollbalg (6) bilden,
und je einem Abrollkolben (8a und 8b),
die starr miteinander verbunden sind und einen Doppelabrollkolben (8) bilden, bestehen, und
die einen gemeinsamen Außenmantel (12 = 12a + 12b) aufweisen, und
- wobei die Außenflächen der Abrollkolben (8a und 8b) und/oder die Innenflächen des Außenmantels (12a und 12b) der beiden Federelemente (4a und 4b) konisch ausgestaltet sind,
**dadurch gekennzeichnet,**
**dass** die Außenflächen der Abrollkolben (8a und 8b) und die Innenflächen des Außenmantels (12a und 12b) der Federelemente (4a und 4b) bezogen auf eine Linie (10) spiegelbildlich zueinander ausgebildet sind.

2. Federungseinrichtung nach Anspruch 1,
**dadurch gekennzeichnet,**
- **dass** die beiden Federelemente (4a und 4b) jeweils einen Innenraum (16a, 16b) aufweisen, die durch eine gemeinsame Abdeckplatte (10) voneinander getrennt und durch mindestens eine Öffnung miteinander verbunden sind.

3. Federungseinrichtung nach Anspruch 2,
**dadurch gekennzeichnet,**
**dass** die mindestens eine Öffnung ein Drosselelement zur Dämpfung der Federelemente (4a und 4b) aufweist.

4. Federungseinrichtung nach Anspruch 2 oder 3,
**dadurch gekennzeichnet,**
**dass** die von den Rollbälgen (6a und 6b) und den Abrollkolben (8a und 8b) umschlossenen Innenräume (16a und 16b) mit einer inkompressiblen Hydraulikflüssigkeit (20) gefüllt sind.

5. Federungseinrichtung nach einem der Ansprüche 1 bis 4,
**dadurch gekennzeichnet,**
**dass** ein Druckspeicher vorgesehen ist.

6. Federungseinrichtung nach einem der Ansprüche 1 bis 5
zur Verwendung in einem eine Vorderradgabel und eine Vorderradnabe aufweisenden Zweiradfahrzeug,
wobei der linke und der rechte Schenkel der Vorderradgabel jeweils eine mit Außenmantel (12), Doppel-Rollbalg (6) und Doppelabrollkolben (8) versehene Federungseinrichtung (2) aufweist.

7. Federungseinrichtung nach Anspruch 6,
**dadurch gekennzeichnet,**
- **dass** der Außenmantel (12 = 12a + 12b) an der Fahrrad-Vorderradgabel, und
- **dass** der doppelte Abrollkolben (8a + 8b) an der Fahrrad-Vorderradnabe befestigt ist.

8. Federungseinrichtung nach Anspruch 6 oder 7,
**gekennzeichnet durch**
eine starre Verbindung zwischen rechtem und linkem Doppelabrollkolben (8).

## Claims

1. Suspension device (2),
which is composed of two spring elements (4a and 4b) which are arranged coaxially with respect to one another,
- wherein the spring elements (4a and 4b) each consist substantially of one rolling bellows (6a and 6b), said rolling bellows (6a and 6b) together forming a common double rolling bellows (6),
and in each case one rolling piston (8a and 8b), said rolling pistons (8a and 8b) being rigidly connected to one another and forming a double rolling piston (8),
and
have a common outer casing (12 = 12a + 12b), and
- wherein the outer faces of the rolling pistons (8a and 8b) and/or the inner faces of the outer casing (12a and 12b) of the two spring elements (4a and 4b) are conical,
**characterized**
**in that** the outer faces of the rolling pistons (8a and 8b) and the inner faces of the outer casing (12a and 12b) of the spring elements (4a and 4b) are symmetrical with respect to one another about a line (10).

2. Suspension device according to Claim 1,
**characterized**
- **in that** the two spring elements (4a and 4b) each have one interior space (16a, 16b), said interior spaces (16a, 16b) being separated from one another by means of a common cover plate (10) and being connected to one another by means of at least one opening.

3. Suspension device according to Claim 2,
**characterized**
**in that** the at least one opening has a throttle element for damping the spring elements (4a and 4b).

4. Suspension device according to Claim 2 or 3,
**characterized**
**in that** the interior spaces (16a and 16b), which are enclosed by the rolling bellows (6a and 6b) and the rolling pistons (8a and 8b), are filled with an incompressible hydraulic fluid (20).

5. Suspension device according to one of Claims 1 to 4,
**characterized**
**in that** a pressure store is provided.

6. Suspension device according to one of Claims 1 to 5,
for use in a two-wheeled vehicle which has a front wheel fork and a front wheel hub,
wherein the left-hand and right-hand limbs of the front wheel fork each have one suspension device (2) which is provided with an outer casing (12), a double rolling bellows (6) and a double rolling piston (8).

7. Suspension device according to Claim 6,
**characterized**
- **in that** the outer casing (12 = 12a + 12b) is fastened to the bicycle front wheel fork, and
- **in that** the double rolling piston (8a + 8b) is fastened to the bicycle front wheel hub.

8. Suspension device according to Claim 6 or 7,
**characterized by**
a rigid connection between the right-hand and left-hand double rolling pistons (8).

## Revendications

1. Système de suspension (2), constitué de deux éléments de ressort (4a et 4b) disposés coaxialement l'un par rapport à l'autre,
- les éléments de ressort (4a et 4b) se composant essentiellement chacun d'un soufflet roulant (6a et 6b), lesquels soufflets roulants forment un double soufflet-roulant commun (6), et d'un piston de déroulage (8a et 8b), lesquels sont connectés rigidement ensemble et forment un double piston de déroulage (8), et qui présentent une enveloppe extérieure commune (12 = 12a + 12b), et
- les surfaces extérieures des pistons de déroulage (8a et 8b) et/ou les surfaces intérieures de l'enveloppe extérieure (12a et 12b) des deux éléments de ressort (4a et 4b) étant configurées de manière conique,
**caractérisé en ce que**
les surfaces extérieures des pistons de déroulage (8a et 8b) et les surfaces intérieures de l'enveloppe extérieure (12a et 12b) des éléments de ressort (4a et 4b) sont réalisées avec une symétrie spéculaire par rapport à un axe (10) les unes par rapport aux autres.

2. Système de suspension selon la revendication 1,
**caractérisé en ce que**
les deux éléments de ressort (4a et 4b) présentent chacun un espace interne (16a, 16b), lesquels sont séparés l'un de l'autre par une plaque de recouvrement (10) et reliés l'un à l'autre par au moins une ouverture.

3. Système de suspension selon la revendication 2,
**caractérisé en ce que**
l'au moins une ouverture présente un élément d'étranglement pour l'amortissement des éléments de ressort (4a et 4b).

4. Système de suspension selon la revendication 2 ou 3,
**caractérisé en ce que**
les espaces internes (16a et 16b) entourés par les soufflets roulants (6a et 6b) et les pistons de déroulage (8a et 8b) sont remplis d'un liquide hydraulique incompressible (20).

5. Système de suspension selon l'une quelconque des revendications 1 à 4,
**caractérisé en ce que**
l'on prévoit un accumulateur de pression.

6. Système de suspension selon l'une quelconque des revendications 1 à 5,
pour l'utilisation dans un véhicule à deux roues présentant une fourche de roue avant et un moyeu de roue avant,
la branche gauche et la branche droite de la fourche de roue avant présentant chacune un dispositif de suspension (2) pourvu d'une enveloppe extérieure (12), d'un double soufflant roulant (6) et d'un double piston de déroulage (8).

7. Système de suspension selon la revendication 6,
**caractérisé en ce que**
l'enveloppe extérieure (12 = 12a + 12b) est fixée sur la fourche de roue avant de la bicyclette, et **en ce que** le double piston de déroulage (8a + 8b) est fixé sur le moyeu de la roue avant de la bicyclette.

8. Système de suspension selon la revendication 6 ou 7,
**caractérisé par**
une connexion rigide entre le double piston de déroulage gauche et droite (8).
